# EUROPÄISCHE PATENTANMELDUNG

(11) **EP 1 316 447 A2**
(43) Veröffentlichungstag der Anmeldung: **04.06.2003**
(21) Anmeldenummer: 02026201.0
(22) Anmeldetag: 26.11.2002
(51) Int. Cl.: B60G 17/00

(54) **Verfahren und Vorrichtung zur Voraktivierung mindestens einer Fahrzeugkomponente**

(30) Priorität: 30.11.2001 DE 10158913
(71) Anmelder: AUDI AG, 85045 Ingolstadt (DE)
(72) Erfinder: Wolf, Norbert, 85055 Ingolstadt (DE); Sonner, Markus, 85055 Ingolstadt (DE)
(74) Vertreter: Thielmann, Frank

(57) **Zusammenfassung**

Die Erfindung betrifft ein Verfahren zur Voraktivierung mindestens einer Fahrzeugkomponente, wobei die mindestens eine Fahrzeugkomponente (22) mindestens einen Betriebsparameter aufweist, folgende Schritte umfassend: a) Überwachen eines Sensorsignals mindestens eines Fahrzeugsensors (34, 36), das die Aktivierung der mindestens einen Fahrzeugkomponente (22) beeinflußt; b) Bildung eines für die mindestens eine Fahrzeugkomponente (22) maßgeblichen Statussignals aus dem Sensorsignal; c) wenn das Statussignal einen ersten Schwellwert überschreitet, der mit einer gewissen Wahrscheinlichkeit darauf schließen läßt, dass demnächst eine Änderung mindestens eines Betriebsparameters der mindestens einen Fahrzeugkomponente (22) erfolgen soll: Voraktivierung der mindestens einen Fahrzeugkomponente (22) durch Änderung des mindestens einen Betriebsparameters der mindestens einen Fahrzeugkomponente (22).

## Beschreibung

Die vorliegende Erfindung betrifft ein Verfahren zur Voraktivierung mindestens einer Fahrzeugkomponente und eine Vorrichtung zur Durchführung des Verfahrens.

Aus der EP 1 070 837 A 2 ist eine Vorrichtung und ein Verfahren zur Leistungssteigerung einer mittels Abgasturbolader aufgeladenen Brennkraftmaschine bekannt. Die Vorrichtung umfasst zusätzlich zum Abgasturbolader einen elektrisch arbeitenden Verdichter, der aus dem Fahrzeuggenerator oder der Fahrzeugbatterie gespeist wird. Sobald ein pedalmäßig signalisierter Beschleunigungswunsch erkannt wird, wird zur Beseitigung des sogenannten Turbolochs der elektrische Verdichter in Betrieb gesetzt. Die Aktivierung des elektrischen Verdichters kann zweistufig erfolgen, beispielsweise zunächst auf zirka die Hälfte der Maximaldrehzahl und anschließend auf einen notwendigen Drehzahlwert. Die Lehre der EP 1 070 837 A 2 zeichnet sich also dadurch aus, dass der elektrische Verdichter bedarfsweise aktiviert wird.

In der Praxis hat sich gezeigt, dass diese Maßnahme zwar zu einer Verbesserung führt, das heißt, das sogenannte Turboloch nicht mehr in dem bisher bekannten Umfang nachteilig zur Geltung kommt, jedoch noch weiterer Verbesserungsbedarf besteht.

Der vorliegenden Erfindung liegt deshalb die Aufgabe zugrunde, ein Verfahren und eine Vorrichtung bereitzustellen, mit dem ganz allgemein die Aktivierung von Fahrzeugkomponenten verbessert werden kann. Insbesondere soll damit auch ermöglicht werden, das sogenannte Turboloch noch besser zu vermeiden.

Diese Aufgabe wird gelöst durch ein Verfahren mit den Schritten von Patentanspruch 1 sowie durch eine Vorrichtung zur Durchführung des Verfahrens mit den Merkmalen gemäß Patentanspruch 21.

Der Erfindung liegt die Erkenntnis zugrunde, dass sich eine wesentliche Verbesserung des bekannten Verfahrens erreichen läßt, wenn zusätzlich zur bedarfsgerechten Aktivierung einer Fahrzeugkomponente, im Anwendungsbeispiel des elektrischen Verdichters, bereits eine Voraktivierung vorgenommen wird, wenn gewisse Umstände darauf schließen lassen, dass mit einer gewissen Wahrscheinlichkeit demnächst mit einer Aktivierung der Fahrzeugkomponente zur rechnen ist.

Hierzu wird für die Voraktivierung mindestens einer Fahrzeugkomponente, die mindestens einen Betriebsparameter aufweist, zunächst ein Sensorsignal mindestens eines Fahrzeugssensors überwacht, das die Aktivierung der mindestens einen Fahrzeugkomponente beeinflusst. Aus dem Sensorsignal wird anschließend ein für die mindestens eine Fahrzeugkomponente maßgebliches Statussignal gebildet. Schließlich, wenn das Statussignal einen ersten Schwellwert überschreitet, der mit einer gewissen Wahrscheinlichkeit darauf schließen läßt, dass demnächst eine Änderung mindestens eines Betriebsparameters der mindestens einen Fahrzeugkomponente erfolgen soll, wird die mindestens eine Fahrzeugkomponente durch Änderung des mindestens einen Betriebsparameters der mindestens einen Fahrzeugkomponente voraktiviert.

Das erfindungsgemäße Verfahren läßt sich nicht nur anwenden im Bereich der Aufladung von Verbrennungsmotoren, sondern auch in anderen Bereichen: wenn die eine Fahrzeugkomponente beispielsweise ein Stoßdämpfer ist, so kann, sofern sich der Stoßdämpfer an der Hinterachse befindet, bei Erkennen eines demnächst stattfindenden Beschleunigungsvorgangs, der Härtebereich des Stoßdämpfers vergrößert werden. Für den Fall, dass der Stoßdämpfer an der Vorderachse angeordnet ist, kann beispielsweise bei Erkennen eines demnächst stattfindenden Bremsvorgangs eine Vergrößerung des Härtebereichs vorgenommen werden.

Die Erfindung basiert auf der Erkenntnis, dass am Beispiel eines Abgasturboladers bereits ein zeitlicher Gewinn beim tatsächlichen Aktivieren eines zusätzlichen elektrischen oder mechanischen Verdichters subjektiv äußerst positiv registriert wird, der in der Größenordnung von wenigen µsec liegt. Ein verzögertes Einsetzen des zusätzlichen Verdichters führt zu dem subjektiven Eindruck eines Defekts. Die Erfindung ermöglicht das zeitliche Vorverlegen der Aktivierung um genau die subjektiv entscheidenden Sekundenbruchteile, so daß für die Bedienperson der zusätzliche Verdichter quasi spontan einsetzt.

Bevorzugt wird die Voraktivierung zurückgenommen, wenn der erste Schwellwert wieder unterschritten wird. Selbstverständlich kann hierfür auch eine gewisse Hysterese vorgesehen werden. Die erfindungsgemäße Voraktivierung führt daher in dem Fall, dass im Anschluss daran dennoch keine Aktivierung erfolgt, bei geeigneter energetischer Auslegung, siehe weiter unten, zu keinem wesentlich erhöhten Energieverbrauch.

Es kann vorgesehen sein, dass im Überwachungsschritt die Sensorsignale von mindestens zwei Fahrzeugsensoren überwacht werden und in dem Schritt zur Bildung des Statussignals die Sensorsignale der mindestens zwei Fahrzeugsensoren miteinander verknüpft werden, insbesondere unter Verwendung eines Kennfelds. Diese Maßnahme berücksichtigt, dass sich eine höhere Wahrscheinlichkeit, ob demnächst eine Änderung eines bestimmten Betriebsparameters einer Fahrzeugkomponente erfolgen wird, erzielen läßt, wenn zwei oder mehrere Sensorsignale von Fahrzeugsensoren miteinander verknüpft werden, wobei diese Fahrzeugsensoren die Aktivierung der mindestens eine Fahrzeugkomponente beeinflussen.

Bevorzugt ist das mindestens eine Sensorsignal mit einer demnächst stattfindenden Änderung der Leistungsanforderung an den Verbrennungsmotor des Fahrzeugs, insbesondere mit einem Bremsvorgang oder einem Beschleunigungsvorgang korreliert. Insbesondere bei Brems- und Beschleunigungsvorgängen wirkt es sich für den Fahrzeugführer positiv aus, wenn in Folge der erfindungsgemäßen Voraktivierung wertvolle Sekundenbruchteile eingespart werden können. Dies resultiert weiterhin in einem deutlichen Zuwachs an Sicherheit.

Das Sensorsignal kann mit einem Laständerungssensor korreliert sein, wobei auf eine demnächst stattfindende Änderung der Leistungsanforderung an den Verbrennungsmotor geschlossen wird, wenn eine negative Laständerung festgestellt wird. Diese Maßnahme berücksichtigt, dass beispielsweise einem Beschleunigungsvorgang häufig eine negative Laständerung vorausgeht. Das Sensorsignal kann mit einem Schubbetriebsensor korreliert sein, wobei auf eine demnächst stattfindende Änderung der Leistungsanforderung an der Verbrennungsmotor geschlossen wird, wenn ein Schubbetrieb des Fahrzeugs festgestellt wird. Ein Fahrzeug wird beispielsweise dann im Schubbetrieb betrieben, wenn auf ein langsameres Fahrzeug aufgeschlossen wird, das heißt beispielsweise vor einem Überholvorgang. Alternativ ergibt sich ein Schubbetrieb auch, wenn der Fahrer vor einer Kurve vom Gaspedal runter geht. Durch das erfindungsgemäße Verfahren stehen bei Voraktivierung eines zusätzlichen Verdichters eines Abgasturboladers dann am Scheitelpunkt der Kurve, d.h. wenn der Fahrer wieder auf das Gaspedal tritt, im Vergleich zum Stand der Technik erhöhte Reserven frühzeitig bereit.

Das Sensorsignal kann auch mit einem Kupplungssensor korreliert sein, wobei auf eine demnächst stattfindende Änderung der Leistungsanforderung an den Verbrennungsmotor geschlossen wird, wenn die Kupplung des Fahrzeugs aktiviert wird, beispielsweise durch Treten des Kupplungspedals. Diese Maßnahme berücksichtigt, dass einem Beschleunigungsvorgang häufig ein Schaltvorgang vorhergeht, wobei der Fahrer beim Beschleunigen in den nächsthöheren Gang wechselt und damit bei einer niedrigeren Drehzahl angelangt.

Als weitere Alternative kann das Sensorsignal mit einem Gaspedalstellungssensor oder mit einem Sensor zur Registrierung der Geschwindigkeit einer Änderung der Stellung des Gaspedals korreliert sein, wobei auf eine demnächst stattfindende Änderung der Leistungsanforderung an den Verbrennungsmotor geschlossen wird, wenn die Stellung des Gaspedals einen vorgebbaren Schwellwert und/oder die Geschwindigkeit der Änderung der Stellung des Gaspedals einen vorgebbaren Schwellwert überschreitet. Diese Maßnahme berücksichtigt, dass der Fahrer seinen Beschleunigungswunsch durch Änderung der Stellung des Gaspedals zum Ausdruck bringt. Zum einen ist hierbei die absolute Stellung des Gaspedals auswertbar und/oder auch die Geschwindigkeit der Änderung des Absolutwerts. Beide Maßnahmen lassen Rückschlüsse zu auf den Fahrerwunsch.

Bevorzugt ist die mindestens eine Fahrzeugkomponente ein Aufladegerät, insbesondere ein elektrischer Booster, ein Abgasturbolader, ein Schraubenverdichter, ein Rootsverdichter oder ein Spirallader oder Kombinationen aus diesen Aufladegeräten, zur Erhöhung der Luftzufuhr an den Verbrennungsmotor. In dem Fall, dass die mindestens eine Fahrzeugkomponente ein elektrischer Booster für einen Abgasturbolader ist, wird bevorzugt der erste Schwellwert so gewählt, dass er eine Lastanforderung anzeigt, die von dem Abgasturbolader alleine nicht erreicht werden kann, wobei die Voraktivierung die Bestromung des elektrisches Boosters umfaßt.

Für den Fall, dass die Voraktivierung die Bestromung eines elektrischen Aufladegeräts, insbesondere eines elektrischen Boosters umfaßt, wird bevorzugt die Bestromung dadurch limitiert wird, dass sie nur bis zu einem vorgebbaren Wert der Generatorauslastung, insbesondere bis zur Vollauslastung des Generators erfolgt, oder bis zu einem vorgebbaren Wert einer Leistungsaufnahme des elektrischen Aufladegeräts. Dies bietet den Vorteil, dass die Bestromung des elektrischen Aufladegeräts im Rahmen der Voraktivierung nicht zu einer Belastung der Fahrzeugbatterie und damit zu einer Reduzierung deren Lebensdauer führt. Vielmehr wird die für die Voraktivierung nötige Energie vom Generator des Fahrzeugs bereitgestellt. Alternativ, insbesondere wenn gestattet werden soll, dass für die Voraktivierung auch Energie aus der Fahrzeugbatterie verwendet wird, ist bevorzugt vorgesehen, eine Grenze des Energiebedarfs durch Limitierung der Leistungsaufnahme des elektrischen Aufladegeräts sicherzustellen.

In einer besonders bevorzugten Ausführungsform umfasst die Voraktivierung auch die Erhöhung der Erregung des Generators. Dadurch kann der Generator mehr Energie an das elektrische Aufladegerät bereitstellen, ohne dass die Fahrzeugbatterie belastet würde.

Der Generator umfaßt bevorzugt einen Generatorregler, wobei die Erhöhung der Erregung des Generators durch Setzen eines definierten Werts an den Reglereingang des Generatorreglers erfolgt. Zusätzlich oder alternativ kann dann die Differenz zwischen Soll-Ladedruck und Ist-Ladedruck ermittelt werden und die Bestromung des elektrischen Aufladegeräts im Hinblick auf diese Differenz geregelt oder gesteuert werden.

Besonders vorteilhaft erfolgt die Bestromung des Aufladegeräts während der Voraktivierung zweistufig: zunächst erfolgt eine insbesondere ungeregelte Bestromung des Aufladegeräts durch Einstellen eines Bestromungswerts, insbesondere unter gleichzeitiger Erhöhung der Erregung des Generators durch Setzen eines definierten Werts an den Reglereingang des Generatorreglers. Anschließend wird eine Differenz zwischen Soll-Ladedruck und Ist-Ladedruck ermittelt und die Bestromung des elektrischen Aufladegeräts im Hinblick auf diese Differenz geregelt oder gesteuert. Durch den ersten Schritt wird eine schnelle, nahezu verzögerungsfreie Voraktivierung des elektrischen Aufladegeräts ermöglicht und durch den zweiten Schritt eine vernünftige Abregelung des elektrischen Aufladegeräts, wenn der Abgasturbolader selbst in der Lage ist, die gewünschte Leistung ohne oder mit geringer Unterstützung des elektrischen Boosters bereitzustellen.

Bevorzugt wird der definierte Wert am Reglereingang des Generatorreglers im Hinblick auf den zeitlichen Verlauf des Sensorsignals variiert. Dadurch lassen sich Erhöhungen oder Erniedrigungen des Sensorsignals und die damit einhergehenden Änderungen der Leistungsanforderung unter Minimierung einer überflüssigen Generatorerregung Rechnung tragen.

Selbstverständlich kann für die Bestromung des elektrischen Aufladegeräts auch die in einer Fahrzeugbatterie gespeicherte elektrische Energie verwendet werden. Dabei kann der augenblickliche Spannungswert des Bordnetzes des Fahrzeugs berücksichtigt werden, insbesondere die Bestromung in Abhängigkeit eines augenblicklichen Spannungswerts des Bordnetzes geregelt werden. Bevorzugt erfolgt dabei die Bestromung derart, dass ein vorgebbarer Spannungswert des Bordnetzes des Fahrzeugs nicht oder nur für eine bestimmte vorgebbare Zeitdauer unterschritten wird.

Die obige Aufgabe wird auch gelöst durch eine Vorrichtung zur Durchführung eines erfindungsgemäßen Verfahrens.

Weitere vorteilhafte Ausführungsformen ergeben sich aus den Unteransprüchen.

Im Nachfolgenden wird ein Ausführungsbeispiel der vorliegenden Erfindung unter Bezugnahme auf die beigefügten Zeichnungen näher erläutert. Es stellen dar:
- Figur 1: ein Ausführungsbeispiel einer Vorrichtung zur Durchführung des erfindungsgemäßen Verfahrens;
- Figur 2: in schematischer Darstellung den Verlauf des Drehmoments, der Gaspedalstellung sowie der Leistung eines elektrischen Boosters;
- Figur 3: in Blockschaltbilddarstellung eine Ausführungsform einer erfindungsgemäßen Vorrichtung; und
- Figur 4: ein Signalflußdiagramm zur schematischen Darstellung einer Ausführungsform des erfindungsgemäßen Verfahrens.

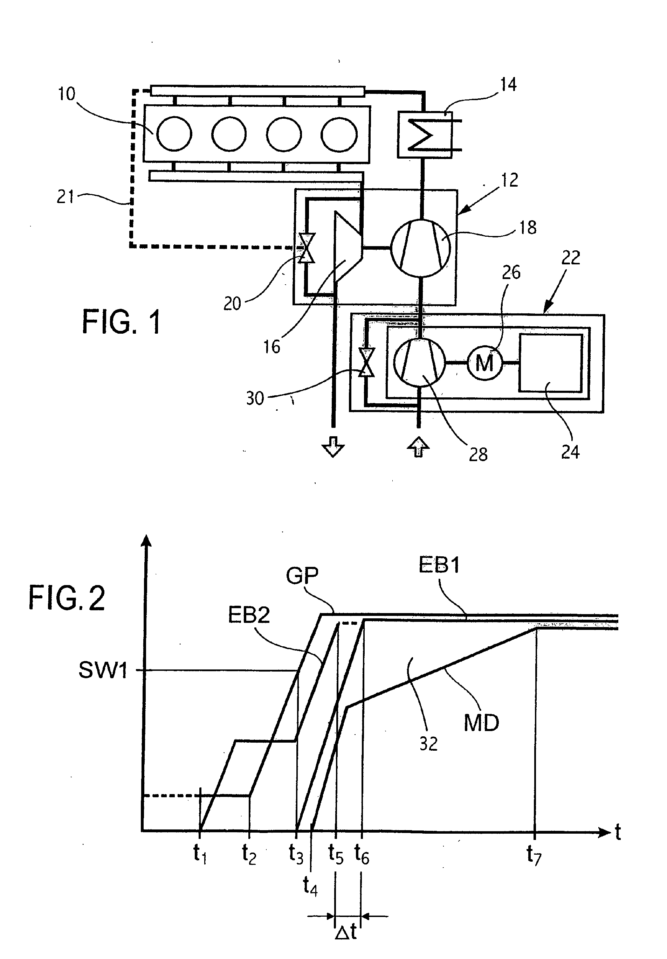

Figur 1 zeigt einen Verbrennungsmotor 10, der über einen Abgasturbolader 12 aufgeladen wird. Bevor die Luft aus dem Abgasturbolader 12 in den Motor eingeleitet wird, durchläuft sie einen Ladeluftkühler 14. Der Abgasturbolader 12 umfasst eine Turbine 16, die vom Abgas des Verbrennungsmotors 10 angetrieben wird. Auf der Welle der Turbine 16 ist ein Verdichter 18 angeordnet, der von der Turbine 16 angetrieben wird. Für den Fall, dass der Abgasstrom des Verbrennungsmotors 10 zu groß wird, ist im Abgasturbolader ein Bypassventil 20 angeordnet, das über eine Steuerleitung 21 gesteuert wird. Seriell zum Abgasturbolader 12 ist ein elektrischer Booster 22 angeordnet. Er umfasst eine Steuerelektronik 24, einen Elektromotor 26 und einen auf der Achse des Elektromotors 26 angeordneten Verdichter 28. Weiterhin ist eine Bypassventil 30 für den Verdichter 28 vorgesehen, so daß für den Fall, daß der Abgasturbolader 12 alleine ausreichend Ladedruck an den Verbrennungsmotor 10 bereitstellen kann, der elektrische Booster umgangen werden kann.

Am Beispiel der in Figur 1 dargestellten Anordnung wird im Nachfolgenden eine Ausführungsform des erfindungsgemäßen Verfahrens vorgestellt. Zur Erörterung der der Erfindung zugrundeliegenden Problematik wird jedoch zunächst noch auf Figur 2 eingegangen. In Figur 2 ist zunächst in gestrichelter Darstellung der zeitliche Verlauf GP der Stellung des Gaspedals bei einem Beschleunigungsvorgang dargestellt. Zum Zeitpunkt t₂ beginnt der Fahrer nach einer Schubbetriebsphase das Gaspedal durchzutreten, wobei er zum Zeitpunkt t₃ einen Schwellwert SW1 überschreitet. Ohne elektrischen Booster würde der zeitliche Verlauf des Drehmoments MD ein Turboloch 32 aufweisen. Zum Zeitpunkt t₇ würde der Abgasturbolader alleine genügend Drehmoment bereitstellen, um dem Fahrerwunsch gerecht zu werden. Im Stand der Technik wird zum Zeitpunkt t₃, zu dem das Gaspedal GP den Schwellwert SW1 überschreitet, der elektrische Booster aktiviert. Der zeitliche Verlauf der Leistung des Boosters ist mit EB1 bezeichnet. Der Zeitraum t₆⁻t₂ vom Beginn des Tretens des Gaspedals bis zum Aufbau der vollen Leistung des elektrischen Boosters wird als unangenehme Verzögerung empfunden. Dieser soll durch das erfindungsgemäße Verfahren entgegengewirkt werden.

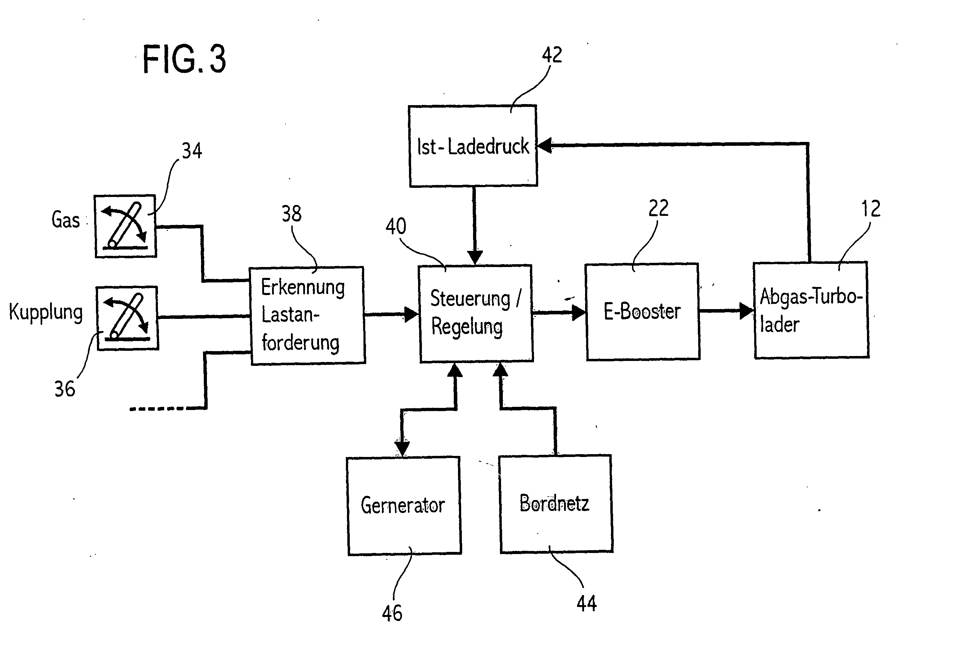

Dazu wird, wie in Figur 3 dargestellt, über Sensoren eine demnächst stattfindende Leistungsanforderung prädiziert. In dem in Figur 3 dargestellten Ausführungsbeispiel wird hierzu ein Gaspedalsensor 34 verwendet, mit dem die Stellung des Gaspedals und/oder die Geschwindigkeit einer Änderung der Stellung des Gaspedals erfasst werden kann. Sie umfasst weiterhin einen Kupplungssensor 36 über den beispielsweise ein Gangwechsel festgestellt werden kann sowie weitere nicht dargestellte Sensoren, unter denen sich beispielsweise ein Laständerungssensor und/oder ein Schubbetriebssensor befinden können. Wesentlich ist, daß bei Verwendung eines Gaspedalsensors die Schwellwerte für die Voraktivierung erfindungsgemäß wesentlich niedriger angesetzt werden als bei den Gaspedalsensoren aus dem Stand der Technik gemäß der EP 1 070 837 A2. Die Sensoren sind mit einem Block 38 verbunden, der gegebenenfalls unter Verknüpfung mehrerer der Sensorsignale der Erkennung einer demnächst stattfindenden Lastanforderung dient. Sobald eine demnächst stattfindende Lastanforderung festgestellt wird, d.h. einer oder mehrere der Sensorsignale überschreiten vorgebbare Schwellwerte, wird eine Steuerungs/Regelungseinheit 40 angesteuert, die als Eingangssignale den Ist-Ladedruck 42, die Spannung des Bordnetzes 44 sowie Informationen zur Auslastung des Generators 46 erhält. Als erste Maßnahme erhöht die Steuerungs/Regelungseinheit 40 die Erregung des Generators 46 durch Setzen eines definierten Werts an den Reglereingang des Generatorreglers. Dadurch kann der elektrische Booster 22 mit mehr Energie versorgt werden, ohne dass die Fahrzeugbatterie belastet würde. Selbstverständlich kann vorgesehen werden, dass bei bestimmten Situationen auch Energie aus der Fahrzeugbatterie zum Betreiben des Boosters 22 verwendet wird. Dazu kann vorgegeben werden, dass ein vorgebbarer Spannungswert des Bordnetzes 44 des Fahrzeugs nicht oder nur für eine bestimmte, vorgebbare Zeitdauer unterschritten wird. Auch kann die Bestromung des elektrischen Boosters 22 im Hinblick auf den augenblicklichen Spannungswert des Bordnetzes 44 des Fahrzeugs geregelt werden. Bei serieller Anordnung von elektrischem Booster 22 und Abgasturbolader 12, wie in Figur 1 dargestellt, führt eine Voraktivierung des elektrischen Boosters 22 dazu, dass der Abgasturbolader 12 schneller sein maximales Drehmoment bereitstellt. Anschließend wird in einer Einheit 42 der Ist-Ladedruck bestimmt und mit dem Soll-Ladedruck, der sich beispielsweise aus der Stellung des Gaspedals 34 in der Steuerungs-/Regelungseinheit 40 ermitteln läßt, verglichen. Im Hinblick auf die Differenz zwischen Ist-Ladedruck und Soll-Ladedruck wird dann die Erregung des Generators 46 und/oder die Bestromung des elektrischen Boosters 22 geregelt. Bei der Voraktivierung kann die Bestromung des elektrischen Boosters 22 dadurch limitiert sein, dass sie nur bis zu einem vorgebbaren Wert der Generatorauslastung, insbesondere bis zur Vollauslastung des Generators erfolgt, oder bis zu einem vorgebbaren Wert einer Leistungsaufnahme des elektrischen Boosters.

Die vorliegende Erfindung ist selbstverständlich nicht auf die serielle Anordnung eines elektrischen Boosters und eines Abgasturboladers begrenzt. Vielmehr können diese auch parallel angeordnet sein und an Stelle des elektrischen Boosters können andere Arten von Aufladegeräten eingesetzt werden.

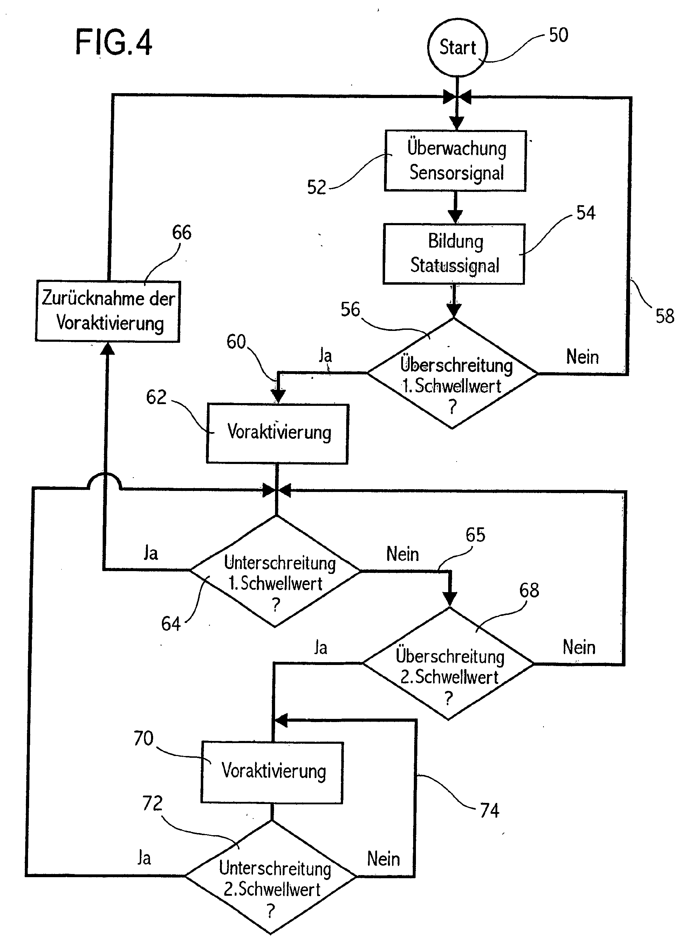

Der zeitliche Ablauf für eine Ausführungsform des erfindungsgemäßen Verfahrens ist zur Verdeutlichung nochmals in Figur 4 dargestellt. Der Start ist mit 50 bezeichnet. Zunächst wird im Schritt 52 mindestens ein Sensorsignal überwacht. Aus diesem wird ein Statussignal 54 gebildet, anhand dessen im Block 56 geprüft wird, ob ein erster Schwellwert überschritten wird. Ist dies nicht der Fall, springt der Ablauf, wie mit dem Pfeil 58 gekennzeichnet, an den Start zurück. Für den Fall, dass der erste Schwellwert überschritten wird, siehe Pfeil 60, findet die Voraktivierung statt. Ohne an dieser Stelle nochmals genauer darauf einzugehen kann dies die Erhöhung der Erregung des Generators umfassen. Für den Fall, dass im Block 64 eine Unterschreitung des ersten Schwellwertes festgestellt wird, wird im Block 66 die Voraktivierung zurückgenommen, der Ablauf springt an den Start 50 zurück. Falls der erste Schwellwert nicht unterschritten wird, siehe Pfeil 66, wird im Block 68 überprüft, ob das Statussignal einen zweiten Schwellwert überschreitet. Der zweite Schwellwert muß nicht notwendigerweise denselben Sensor betreffen, vielmehr kann es sich hier auch um einen Schwellwert betreffend einen anderen Sensor handeln. Wird der zweite Schwellwert nicht übersschritten, springt der Ablauf zu Block 64 zurück. Für den Fall, dass jedoch auch ein zweiter Schwellwert überschritten wird, findet im Block 70 eine Aktivierung statt. Wird im Block 72 keine Unterschreitung des zweiten Schwellwerts festgestellt, springt der Ablauf zu Block 70, siehe Pfeil 74, zurück. Für den Fall, dass der zweite Schwellwert jedoch wieder unterschritten wird, springt der Ablauf zu Block 64 zurück, wo auf die Unterschreitung des ersten Schwellwerts geprüft wird.

Abschließend wird nochmals auf Figur 2 Bezug genommen. Geht dem Zeitpunkt t₁ eine Schubbetriebsphase voraus, die den entsprechenden zeitlichen Schwellwert überschreitet, so wird zum Zeitpunkt t₁ der elektrische Booster voraktiviert, siehe Kurvenzug EB2. Wenn nun zum Zeitpunkt t₃ der Schwellwert SW1 der Stellung des Gaspedals überschritten wird, wird der elektrische Booster aktiviert. Durch diese Maßnahme erreicht die Leistung des elektrischen Boosters bereits zum Zeitpunkt t₅ ihren Maximalwert. Gegenüber dem Stand der Technik ergibt sich ein Zeitvorsprung von Δt.

## Patentansprüche

1. Verfahren zur Voraktivierung mindestens einer Fahrzeugkomponente, wobei die mindestens eine Fahrzeugkomponente (22) mindestens einen Betriebsparameter aufweist, folgende Schritte umfassend:
a) Überwachen eines Sensorsignals mindestens eines Fahrzeugsensors (34, 36), das die Aktivierung der mindestens einen Fahrzeugkomponente (22) beeinflußt;
b) Bildung eines für die mindestens eine Fahrzeugkomponente (22) maßgeblichen Statussignals aus dem Sensorsignal;
c) wenn das Statussignal einen ersten Schwellwert überschreitet, der mit einer gewissen Wahrscheinlichkeit darauf schließen läßt, dass demnächst eine Änderung mindestens eines Betriebsparameters der mindestens einen Fahrzeugkomponente (22) erfolgen soll: Voraktivierung der mindestens einen Fahrzeugkomponente (22) durch Änderung des mindestens einen Betriebsparameters der mindestens einen Fahrzeugkomponente (22).

2. Verfahren nach Anspruch 1, **gekennzeichnet durch** folgenden weiteren Schritt:
d) Zurücknehmen der Voraktivierung, wenn der erste Schwellwert wieder unterschritten wird.

3. Verfahren nach Anspruch 1 oder 2,
**dadurch gekennzeichnet,**
**dass** in Schritt a) die Sensorsignale von mindestens zwei Fahrzeugsensoren (34, 36) überwacht werden und in Schritt b) die Sensorsignale der mindestens zwei Fahrzeugsensoren (34, 36) zur Bildung des Statussignals miteinander verknüpft werden, insbesondere unter Verwendung eines Kennfelds.

4. Verfahren nach einem der Ansprüche 1 bis 3,
**dadurch gekennzeichnet,**
**dass** das mindestens eine Sensorsignal mit einer demnächst stattfindenden Änderung der Leistungsanforderung an den Verbrennungsmotor (10) des Fahrzeugs, insbesondere einem Bremsvorgang oder einem Beschleunigungsvorgang, korreliert ist.

5. Verfahren nach Anspruch 4,
**dadurch gekennzeichnet,**
**dass** das Sensorsignal mit einem Laständerungssensor korreliert ist und auf eine demnächst stattfindende Änderung der Leistungsanforderung an den Verbrennungsmotor (10) geschlossen wird, wenn eine negative Laständerung festgestellt wird.

6. Verfahren nach einem der Ansprüche 4 oder 5,
**dadurch gekennzeichnet,**
**dass** das Sensorsignal mit einem Schubbetriebsensor korreliert ist und auf eine demnächst stattfindende Änderung der Leistungsanforderung an den Verbrennungsmotor (10) geschlossen wird, wenn ein Schubbetrieb des Fahrzeugs festgestellt wird.

7. Verfahren nach einem der Ansprüche 4, 5 oder 6,
**dadurch gekennzeichnet,**
**dass** das Sensorsignal mit einem Kupplungssensor (36) korreliert ist und auf eine demnächst stattfindende Änderung der Leistungsanforderung an den Verbrennungsmotor (10) geschlossen wird, wenn die Kupplung des Fahrzeugs getreten wird.

8. Verfahren nach einem der Ansprüche 4 bis 7,
**dadurch gekennzeichnet,**
**dass** das Sensorsignal mit einem Gaspedalstellungssensor (34) oder mit einem Sensor zur Registrierung der Geschwindigkeit einer Änderung der Stellung des Gaspedals korreliert ist und auf eine demnächst stattfindende Änderung der Leistungsanforderung an den Verbrennungsmotor (10) geschlossen wird, wenn die Stellung des Gaspedals einen vorgebbaren Schwellwert und/oder die Geschwindigkeit der Änderung der Stellung des Gaspedals einen vorgebbaren Schwellwert überschreitet.

9. Verfahren nach einem der vorhergehenden Ansprüche,
**dadurch gekennzeichnet,**
**dass** die mindestens eine Fahrzeugkomponente ein Stoßdämpfer, insbesondere ein Stoßdämpfer an der Hinterachse des Fahrzeugs ist, und die Voraktivierung darin besteht, den Härtebereich des Stoßdämpfers zu ändern.

10. Verfahren nach einem der Ansprüche 1 bis 8,
**dadurch gekennzeichnet,**
**dass** die mindestens eine Fahrzeugkomponente ein Aufladegerät (22), insbesondere einen elektrische Booster, einen Abgasturbolader, einen Schraubenverdichter, einen Rootsverdichter oder einen Spirallader oder Kombinationen aus diesen Aufladegeräten, zur Erhöhung der Luftzufuhr an den Verbrennungsmotor (10) umfaßt.

11. Verfahren nach Anspruch 10,
**dadurch gekennzeichnet,**
**dass** die mindestens eine Fahrzeugkomponente ein elektrischer Booster (22) für einen Abgasturbolader (12) ist und in Schritt c) der erste Schwellwert so gewählt wird, dass er eine Lastanforderung anzeigt, die von dem Abgasturbolader (12) alleine nicht erreicht werden kann, und die Voraktivierung die Bestromung des elektrisches Boosters (22) umfaßt.

12. Verfahren nach Anspruch 10 oder 11,
**dadurch gekennzeichnet,**
**dass** die Voraktivierung die Bestromung eines elektrischen Aufladegeräts (22), insbesondere eines elektrischen Boosters, umfaßt, wobei die Bestromung dadurch limitiert wird, dass sie nur bis zu einem vorgebbaren Wert der Generatorauslastung, insbesondere bis zur Vollauslastung des Generators (46), erfolgt oder bis zu einem vorgebbaren Wert einer Leistungsaufnahme des elektrischen Aufladegeräts.

13. Verfahren nach einem der Ansprüche 11 oder 12,
**dadurch gekennzeichnet,**
**dass** die Voraktivierung die Erhöhung der Erregung des Generators (46) umfaßt.

14. Verfahren nach einem der Ansprüche 11 bis 13,
**dadurch gekennzeichnet,**
**dass** der Generator (46) einen Generatorregler umfaßt und die Erhöhung der Erregung des Generators (46) durch Setzen eines definierten Werts an den Reglereingang des Generatorreglers erfolgt.

15. Verfahren nach einem der Ansprüche 11 bis 14,
**dadurch gekennzeichnet,**
**dass** die Differenz zwischen Soll-Ladedruck und Ist-Ladedruck (42) ermittelt wird, und die Bestromung des elektrischen Aufladegeräts (22) im Hinblick auf diese Differenz geregelt oder gesteuert wird.

16. Verfahren nach einem der Ansprüche 11 bis 13,
**dadurch gekennzeichnet,**
**dass** die Bestromung des Aufladegeräts (22) während der Voraktivierung zweistufig erfolgt:
- zunächst Bestromung des Aufladegeräts (22) unabhängig von einer Differenz zwischen Soll-Ladedruck und Ist-Ladedruck, insbesondere unter gleichzeitiger Erhöhung der Erregung des Generators (46) durch Setzen eines definierten Werts an den Reglereingang des Generatorreglers;
- dann Ermitteln der Differenz zwischen Soll-Ladedruck und Ist-Ladedruck und Regeln oder Steuern der Bestromung des elektrischen Aufladegeräts (22) im Hinblick auf diese Differenz.

17. Verfahren nach einem der Ansprüche 14 oder 16,
**dadurch gekennzeichnet,**
**dass** der definierte Wert am Reglereingang des Generatorreglers im Hinblick auf den zeitlichen Verlauf des Sensorsignals variiert wird.

18. Verfahren nach einem der Ansprüche 11 bis 17,
**dadurch gekennzeichnet,**
**dass** für die Bestromung des elektrischen Aufladegeräts (22) in mindestens einer Fahrzeugbatterie gespeicherte elektrische Energie verwendet wird.

19. Verfahren nach Anspruch 18,
**dadurch gekennzeichnet,**
**dass** bei der Bestromung der augenblickliche Spannungwert des Bordnetzes (44) des Fahrzeugs berücksichtigt wird.

20. Verfahren nach Anspruch 19,
**dadurch gekennzeichnet,**
**dass** die Bestromung geregelt wird unter Berücksichtigung des augenblicklichen Spannungswerts des Bordnetzes (44) des Fahrzeugs.

21. Verfahren nach einem der Ansprüche 19 oder 20,
**dadurch gekennzeichnet,**
**dass** die Bestromung derart erfolgt, dass ein vorgebbarer Spannungswert des Bordnetzes (44) des Fahrzeugs nicht oder nur für eine bestimmte, vorgebbare Zeitdauer unterschritten wird.

22. Vorrichtung zur Durchführung eines Verfahrens nach einem der Ansprüche 1 bis 21.
